# EUROPEAN PATENT APPLICATION

(11) **EP 1 000 540 A1**
(43) Date of publication of application: **17.05.2000**
(21) Application number: 99650107.8
(22) Date of filing: 15.11.1999
(51) Int. Cl.: A01M 7/00, A01B 79/00

(54) **Image processing**

(30) Priority: 16.11.1998 IE 980940
(71) Applicant: McLoughlin, Daniel, Fermoy, County Cork (IE)
(72) Inventor: McLoughlin, Daniel, Fermoy, County Cork (IE)
(74) Representative: Weldon, Michael James

(57) **Abstract**

An apparatus (1) has a light-sealing enclosure (2) which is drawn over vegetation on sleigh-like light seals (15). The vegetation within the enclosure is conditioned by a roller (6). Conditioned vegetation is illuminated in a transverse line by a set of four laser emitters (20) and corresponding cameras (21) capture images. These images are processed by analysis of height and texture data to identify weeds. A weedkiller dispenser (30) selectively sprays weeds according to the image processing output. A seed dispenser (35) selectively dispenses seed in the sprayed area to ensure desired vegetation takes over the affected area.

## Description

The invention relates to image processing for analysis of vegetation.

One of the oldest problems in farming of all types has been control of weeds because they inhibit growth of the desired plants and make harvesting more difficult. An example is the dock weed in pastures. The seeds of dock weeds can survive for several years and it is therefore extremely difficult to eradicate them from a pasture. Other weeds which commonly cause problems to farms are couch grass, hybrid grass, and clover.

At present, the approach to weed control is general application of a "selective" weedkiller. However, problems with this approach are that the crop yield crop is often adversely affected and the weedkiller does not kill seeds in the ground.

On the other hand, another problem encountered by farmers is that of efficiently applying fertilisers. At present, fertilisers are typically spread in a blanket manner over all of the ground area.

Japanese Patent Specification No. JP0707968 describes use of image processing in application of weedkiller. However, it appears that the arrangement described would have limited usefulness, particularly because of poor image quality.

It is therefore an object of the invention to provide an image processing apparatus for improved selective treatment of vegetation.

According to the invention, there is provided an image processing apparatus comprising means for moving over vegetation, means for capturing images of the vegetation, and means for processing said images and for generating an output signal for treatment of the vegetation, characterised in that:-
the apparatus further comprises means for illuminating the vegetation at a target area, and a camera directed to capture images from the target area.

In one embodiment, the illumination means comprises means for illuminating a linear target area. Preferably, the target area extends transversely with respect to the direction of travel of the apparatus.

In another embodiment, the illumination means comprises means for emitting a light beam at an acute angle in the range of 3° to 60° with respect to the horizontal. In one embodiment, the angle is in the range of 5° to 30°.

In one embodiment, the camera comprises a filter mounted to allow only light of an emitted wavelength to be captured

Preferably, the apparatus further comprises a ground-contacting enclosure to prevent entry of ambient light, and the illumination mean is mounted within the enclosure.

In one embodiment, the enclosure comprises lateral light seals extending in a longitudinal direction and comprising means for sliding on the ground.

In another embodiment, the light seals are tubular.

In a further embodiment, the enclosure further comprises ground-contacting skirts extending transversely with respect to the direction of travel.

Preferably, the apparatus further comprises means for pressing down vegetation in the target area.

Said pressing means may comprise a roller mounted forwardly of the target area.

In one embodiment, the image processing means comprises means for identifying plant varieties according to height and texture.

In another embodiment, the image processing means comprises means for dividing an image area into a plurality of zones corresponding to zones of an output device for treatment of vegetation.

In a further embodiment, the apparatus comprises a weedkiller applicator and a controller for controlling the applicator for selective application of weedkiller according to identification of weeds by the image processing means.

In one embodiment, the apparatus further comprises a seed dispenser and the controller comprises means for controlling selective seed dispensing.

The invention will be more clearly understood from the following description of some embodiments thereof, given by way of example only with reference to the accompanying drawings in which:-
Fig. 1 is a diagrammatic side view of an image processing apparatus of the invention;
Fig. 2 is a cross-sectional view of a light seal of the apparatus;
Fig. 3 is a diagrammatic front view of the apparatus;
Fig. 4 is a flow diagram illustrating operation of a controller of the apparatus; and
Figs. 5 and 6 are plots of reflected light for image processing.

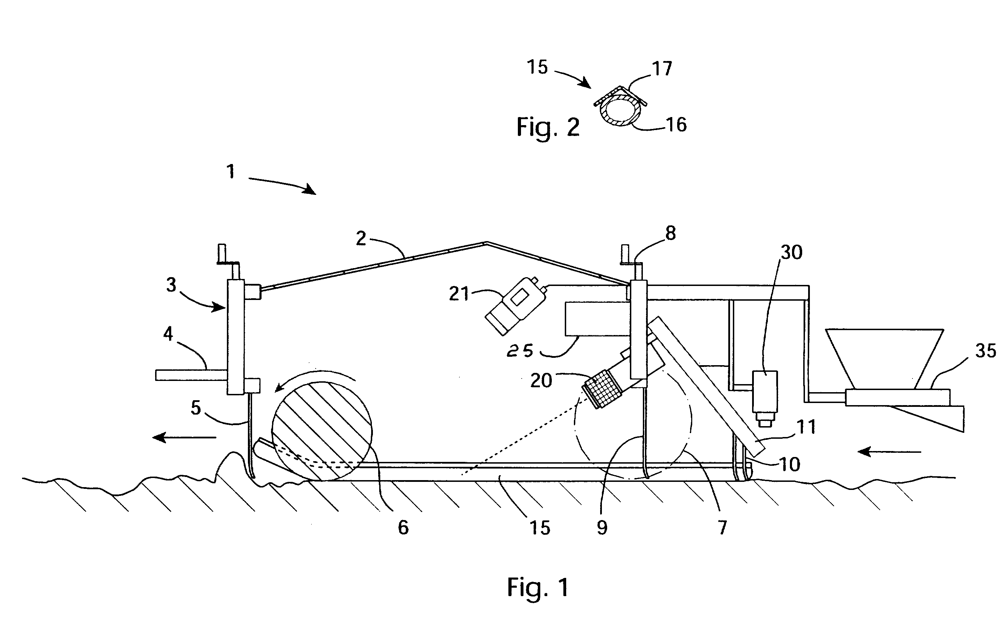

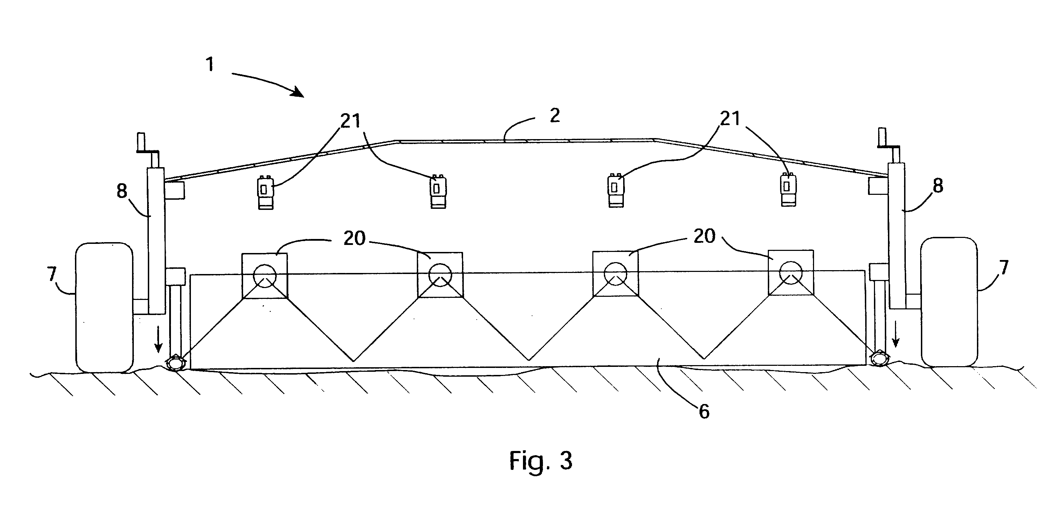

Referring to Figs. 1 to 3, an image processing apparatus 1 of the invention is illustrated. The apparatus 1 comprises an enclosure 2 to create an environment free of ambient light for image processing to take place. The apparatus 1 is hauled to the left as viewed in Fig. 1 by use of a front frame 3 having a towing point 4, the height of which is adjustable by a spindle mechanism. The front frame 3 also supports a rubber skirt 5 extending transversely across the enclosure 2.

A cylindrical roller 6 is mounted within the enclosure 2 at the front. A pair of wheels 7 are mounted at the rear of the enclosure 2 on the outside of it. Height of the wheels 7 is adjustable by operation of a spindle mechanism 8. A rear frame of the apparatus 1 also supports a rubber skirt 9 extending transversely at the rear wall of the enclosure 2. It also supports an outrigger 11, in turn supporting further skirts 10 extending transversely.

The apparatus 1 also comprises a pair of lateral light seals 15, each comprising a rubber tube 16 and an upper steel guide 17 as shown in Fig. 2. The light seals 15 extend upwardly at the front in a sleigh-like configuration.

The enclosure 2 supports four laser emitters 20 mounted in a line extending transversely across at the rear of the enclosure 2. Each laser emitter 20 comprises means for generating a fanned-out laser beam covering a transverse distance of approximately 0.6m and they are mounted so that together they illuminate the ground in a continuous line across the width of the enclosure 2.

A camera 21 is mounted directly above each laser emitter 20 and is directed downwardly to the area of impingement of the associated laser light on the ground. The angle of incidence of the laser beams is in the range of 3° to 60° and is preferably in the range 5° to 30°. In this embodiment the angle is approximately 20°. The camera angle is approximately 45°. The image processing circuits include a dedicated image processor for each camera/laser pair.

A controller 25 comprises image processing circuits connected to the laser emitters 20 and to the cameras 21. The controller 25 also comprises control circuits for a weedkiller spray boom 30 and a seed dispenser 35. The spray boom 30 comprises eight spray nozzles, each individually controlled by a solenoid value. The seed dispenser 35 comprises eight discrete dispensers, each also individually controlled by a solenoid value. The discrete spray areas and seed dispensing areas are defined as zones in the controller 25.

In operation, the apparatus 1 is hauled to a site on the towing wheels 7. The site may, for example, be a grazing pasture in which there are weeds such as docks and couch grass. The wheels 7 are then raised using the mechanisms 8. The extent of raising determines the pressure exerted by the light seals 15 on the ground. This is selected according to the ground and vegetation conditions. Also, the towing height is selected according to the ground conditions.

The apparatus 1 is then pulled so that it slides on the light seals 15, which act like a sleigh. Because of this they very effectively seal the enclosure by preventing entry of ambient light. The front skirt 5 and the rear skirts 9 and 10 are also very effective at sealing the enclosure from ambient light.

The laser emitters 20 are activated to illuminate a line of light on the vegetation extending transversely across the enclosure. The vegetation which is illuminated is conditioned by being pressed down to a relatively flat orientation by the roller 6. This is very important for the image processing.

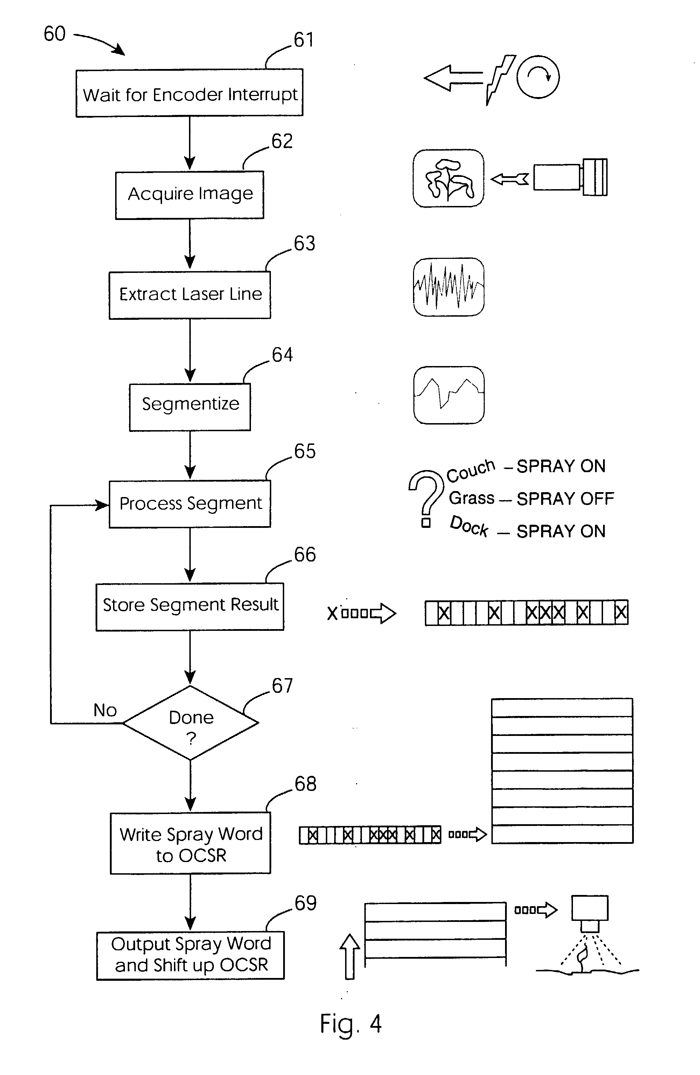

Referring to Figs 4 to 6, a method 60 is performed by the controller 25 for each laser/camera pair. This includes the following steps, in which the numerals 61 to 69 correspond to those of Fig. 4.

| | | | | |
|---|---|---|---|---|
| (Preconditions) | | | | |
| | Laser beam integrity verified | | | |
| | Imaging enclosure security verified | | | |
| | Spray system pressure verified | | | |
| | Intensity normalisation array updated | | | |
| | | | | |
| 61 | Wait for Interrupt/or Clock/or Loop | | | |
| | | Process has three modes of operation - external interrupt, internal clock, and free running. External interrupt is from machine encoder, and is the mode used during field operation. | | |
| | | | | |
| 62 | Acquire image from camera | | | |
| | Reset encoder interrupt counter | | | |
| | | | | |
| 63 | Extract laser line from image | | | |
| | Normalise intensity levels | | | |
| | | | | |
| 64 - 67 | Process laser line as eight separate zones: | | | |
| | | For each zone: | | |
| | | | Divide into n segments (n <= 10) | |
| | | | Measure and store depth of each segment | |
| | | | Measure intensities of each segment | |
| | | | Quantize and store segment intensity levels (n <= 128) | |
| | | | Measure and store granularity of each segment | |
| | | | Decide what the zone contains by applying the following rules to each segment: | |
| | | | | Docks - small depth, high average intensity, low quantization range, low granularity. |
| | | | | Couch Grass - medium depth, medium average intensity, high quantization range, medium granularity. |
| | | | | Hybrid Grass - large depth, low average intensity, low quantization range, high granularity. |
| | | | | Clover - large depth, high average intensity, low quantization range, low granularity. |
| | Compute the percentage occupancy in the zone for each weed or by counting the results for each contiguous segment. Apply occupancy rules to avoid false positives. | | | |
| 68, 69 | When each spray zone has been processed, assemble all the spray control bits into a spray byte, and write it to the bottom of the Spray Control Shift Register (SCSR). | | | |
| | Shift the SCSR up one. | | | |
| | Read the top byte of the SCSR and write it to the Spray Boom Control Hardward. | | | |
| | Write the same byte to the bottom of the Reseed Control Shift Register RCSR) | | | |
| | Shift the RCSR up one. | | | |
| | Read the top byte of the RCSR and write it to the Reseed Boom Control Hardware. | | | |
| | Loop back to line 61. | | | |

In this way, the controller 25 recognises weeds as the imaging enclosure 2 passes over them. It also activates the spray boom and the seed boom at exactly the right moment because it takes into account the speed of movement of the apparatus 1. The weedkiller which is sprayed from the boom 30 kills the weed and therefore prevents it from seeding if it has not already done so. The weedkiller does not affect the grass or other desired vegetation seed which are sown immediately afterwards and this allows grass or other desired vegetation to very quickly take over the area in which the weed was growing.

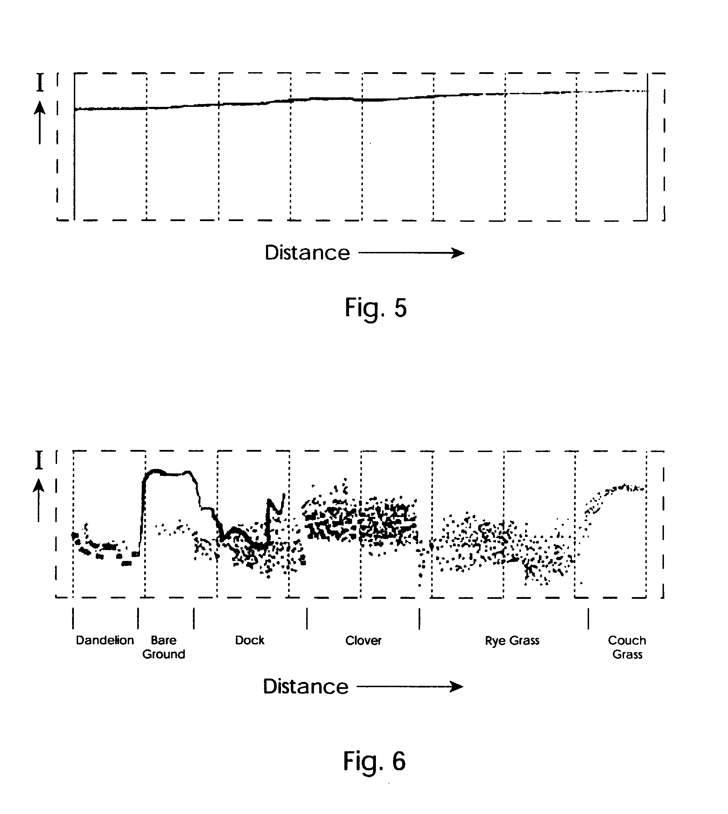

As described above, the captured image provides sufficient information to make a determination as to the types of vegetation in the pasture. The controller 25 extracts from the image data relating to vegetation height, vegetation density, and the leaf and/or stem size of the vegetation. The desired image is achieved by enclosing the area of pasture to be imaged in the lightproof enclosure and illuminating the pasture with thin laser line across the full width of the imaged area. In order to provide height and texture information, the angle of incidence of the laser light is generally low - most preferably in the region of 15 to 20 degrees to the ground. Each camera 21 is an area scan CCD camera positioned at a height above the laser, and generally at an angle of 45 degrees to the ground. The laser frequency is chosen to provide its peak output at a frequency at which the camera array is most sensitive. Additionally, the camera lens is fitted with a filter which allows light at the laser frequency to pass, but obstructs other frequencies. The signal from the camera is passed to an image frame store which captures a complete image frame and makes it available for subsequent processing by the controller 25. The resultant image, as it would appear when the machine is positioned on bare ground, is shown in Fig. 5. If the ground were perfectly level then the line in the image would be completely straight. The undulating nature of the line is caused by natural variations in ground height.

When another image is taken with the machine positioned over pasture with a representative vegetation sample, the shape of the laser line is modulated by the vegetation to provide a laser image which contains information about the pasture that can be extracted by the image processing techniques above. A sample image, such as would be obtained under these conditions is shown in Fig. 6.

It is to be noted that:-
(i) the height of the vegetation is determined by measuring the deflection of the laser line from a nominal base line, and
(ii) the texture of the vegetation, and subsequently its leaf and stem size and its growth density, is determined by examining the texture of the laser line.

When the image is read into a computer for processing the following operations are performed upon it in order to extract the information that is required to identify the various plant types:
- The area occupied by the laser line is determined by a search for the upper and lower limits of the laser line. Then this is defined as the region of interest (ROI) for further processing.
- The ROI is divided into eight horizontal zones corresponding in size on the image to the area of action of the spray and/or reseed mechanisms at the rear of the machine. The image is processed to remove noise.
- The average height of the vegetation in each zone is measured by measuring the deflection of the laser line in the Y direction from a nominal base line. A number of measurements are taken for each zone, and these are used to define the "envelope" for each zone.
- The number of discrete image objects in each zone is ascertained.
- The size, position and shape of each object in each zone is determined.
- Using the height, size and shape data for each object, and the distribution of these objects within each zone, a determination of the nature of each object is made.
- The following general rules are applied in order to allow the system to apply voting techniques as to the possible outcome:
   - Clusters of small sized objects at a low height with a high population density exhibiting small height variation:- couch grass.
   - Clusters of small sized objects at medium to high height with a medium population density exhibiting large height variation:- rye grass.
   - Clusters of medium sized objects at medium height with a medium to high population density and significant object overlap, and medium to high height variation:- clover.
   - Medium objects of medium height exhibiting heightened intensity values, of varying shape and below a given size limit:- dandelion.
   - Large objects of medium height exhibiting height intensity values, of varying shape and above a certain size limit:- dock.
   - Large object of low height exhibiting high intensity values, of regular shape, with little variation in the Y direction, and above a certain size limit:- bare ground.

When the entire signal has been processed, the result for each zone is analysed to determine whether a process should be applied to this zone. The result for all of the zones is assembled into a "spray byte" which is stored in a shift register. The shift register is clocked with input from the encoder to activate the process mechanism at the rear of the machine when it is aligned with the segment of pasture to which the spray byte relates.

It will be appreciated that the invention provides for very effective weed removal. Weeds are killed selectively before they reach the stage of seeding. Also, the weed is replaced within a short period by grass or other desired vegetation without the need to spread the seed over a large area. The apparatus 1 allows very effective and efficient user of weedkiller and seed without adversely affecting yield of the desired crop.

The invention is not limited to the embodiments described but may be varied in construction and detail within the scope of the claims. For example, the apparatus need not include a roller as the frame and light skirt may sufficiently condition the vegetation. Also, the apparatus may include a weedkilling device which operates to physically remove weeds instead of spraying them. The apparatus may operate to detect beneficial plants and selectively apply nutrients. Also, the light seals may comprise steel tubes.

## Claims

1. An image processing apparatus comprising means for moving over vegetation, means for capturing images of the vegetation, and means for processing said images and for generating an output signal for treatment of the vegetation, characterised in that:-
the apparatus further comprises means (20) for illuminating the vegetation at a target area, and a camera (21) directed to capture images from the target area.

2. An apparatus as claimed in claim 1, wherein the illumination means comprises means (20) for illuminating a linear target area.

3. An apparatus as claimed in claim 2, wherein the target area extends transversely with respect to the direction of travel of the apparatus.

4. An apparatus as claimed in any preceding claim, wherein the illumination means comprises means for emitting a light beam at an acute angle in the range of 3° to 60°, and preferably 5° to 30° with respect to the horizontal.

5. An apparatus as claimed in any preceding claim, wherein the camera comprises a filter mounted to allow only light of an emitted wavelength to be captured.

6. An apparatus as claimed in any preceding claim, wherein the apparatus further comprises a ground-contacting enclosure to prevent entry of ambient light, and the illumination mean is mounted within the enclosure.

7. An apparatus as claimed in claim 6, wherein the enclosure comprises lateral light seals extending in a longitudinal direction and comprising means for sliding on the ground.

8. An apparatus as claimed in claim 7, wherein the light seals are tubular.

9. An apparatus as claimed in any of claims 6 to 8, wherein the enclosure further comprises ground-contacting skirts extending transversely with respect to the direction of travel.

10. An apparatus as claimed in any preceding claim, wherein the apparatus further comprises means for pressing down vegetation in the target area.

11. An apparatus as claimed in claim 10, wherein said pressing means comprises a roller mounted forwardly of the target area.

12. An apparatus as claimed in any preceding claim, wherein the image processing means comprises means for identifying plant varieties according to height and texture.

13. An apparatus as claimed in claim 12, wherein the image processing means comprises means for dividing an image area into a plurality of zones corresponding to zones of an output device for treatment of vegetation.

14. An apparatus as claimed in any preceding claim, wherein the apparatus comprises a weedkiller applicator and a controller for controlling the applicator for selective application of weedkiller according to identification of weeds by the image processing means.

15. An apparatus as claimed in claim 14, wherein the apparatus further comprises a seed dispenser and the controller comprises means for controlling selective seed dispensing.
